# EUROPEAN PATENT APPLICATION

(11) **EP 1 278 191 A1**
(43) Date of publication of application: **22.01.2003**
(21) Application number: 01917533.0
(22) Date of filing: 28.03.2001
(51) Int. Cl.: G11B 20/12, G11B 20/10, G06F 3/06

(54) **RECORDING FORMAT, RECORDING DEVICE AND REPRODUCING DEVICE**

(30) Priority: 31.03.2000 JP 2000096512; 31.03.2000 JP 2000096513
(71) Applicant: MATSUSHITA ELECTRIC INDUSTRIAL CO., LTD., Kadoma-shi, Osaka 571-8501 (JP)
(72) Inventor: YAGUCHI, Yoshitaka, Takatsuki-shi, Osaka 569-0061 (JP); KUNO, Yoshiki, Moriguchi-shi, Osaka 570-0054 (JP); KOUDO, Toshikazu, Nishinomiya-shi, Hyogo 663-8102 (JP); KUBO, Noriaki, Takatsuki-shi, Osaka 569-1122 (JP); YAMAUCHI, Kenichiro, Nagaokakyo-shi, Kyoto 617-0845 (JP); TANAKA, Ryuichiro, Kyoto-shi, Kyoto 612-8485 (JP)
(74) Representative: Grünecker, Kinkeldey, Stockmair & Schwanhäusser Anwaltssozietät
(86) International application number: JP0102550
(87) International publication number: WO01075878

(57) **Abstract**

In a conventional hard disk apparatus, as the amount of data becomes large, just as in the case of AV data, the number of times a data reading or writing command is issued increases, and the overhead of an interface increases, whereby the usability of the CPU of a microcomputer increases.

A hard disk apparatus in accordance with the present invention comprises a hard disk 5 of recording data, a hard disk controller 4 of controlling the hard disk 5, an IDE controller 103 of controlling the hard disk controller 4, and a command controller 102 of creating a command to be issued by the IDE controller 103 from a predetermined command used to reproduce or record data and transferring the command to the IDE controller 103.

## Description

### TECHNICAL FIELD

The present invention relates to a recording format for use in recording apparatuses, such as hard disk apparatuses and optical disc apparatuses, of recording AV data, a recording apparatus of recording data, a reproducing apparatus of reproducing data, and a program thereof.

### BACKGROUND TECHNOLOGY

First, a first conventional technology will be described.

A conventional hard disk apparatus for recording audiovisual data (AV data) is connected to a PC (personal computer) via a cable and a connector, and records and reproduces AV data under the control of the CPU included in the PC.

In other words, when data sent from an AV apparatus, such as an STB (satellite broadcast receiver), is recorded, the PC temporarily reads AV data, and the hard disk apparatus records the AV data under the control of the PC.

In addition, when the AV data recorded in the hard disk apparatus is reproduced and displayed on the display of the PC, the hard disk apparatus temporarily transfers the AV data to the PC under the control of the PC, and the PC reads the AV data and then decodes and displays the data on the display.

This hard disk apparatus can carry out special reproduction, such as cueing and reviewing, as well as ordinary reproduction. A recording format that is used for the conventional hard disk apparatus to attain this kind of special reproduction will be described below.

First, it is assumed that AV data will be recorded on the hard disk apparatus on the basis of the MPEG2 transport stream.

When the AV data is recorded, the PC creates a special reproduction table, and the table is recorded in the hard disk apparatus.

In this case, the special reproduction table is information that is used for specifying the positions of images included in the AV data and used for special reproduction, and comprises information on the head positions and types of frames and the data lengths of the frames recorded on a magnetic disk medium.

The head position of a frame represents the LBA (logical block address) of the head of the frame recorded on the magnetic disk medium; the type represents a distinction among I-frame, P-frame and B-frame; and the data length represents the number of sectors wherein the frame is recorded.

The special reproduction table described above as the recording format in order to realize special reproduction is recorded in an area different from that for the AV data.

When special reproduction is carried out, the special reproduction table is first referred to, whereby the position of an I frame, used for the special reproduction, on the disk medium is specified, and the I frame used for the special reproduction, the position of which is specified, is read. In this way, when special reproduction is carried out, the AV data of the portion used for the special reproduction can be referred to indirectly from the special reproduction table.

Next, a second conventional technology will be described.

In recent years, with the widespread use and progress of personal computers, magnetic disk apparatuses, such as hard disk drives, have been used in large quantities as external storage apparatuses because of their large capacities and high-speed performance. With the enlargement of computer software and the increase in the capacity of data, these magnetic disk apparatuses used as external storage apparatuses are further requested to have larger capacities. Furthermore, disk apparatuses taking advantage of their high-speed performance and large capacities have been used not only for computers but also for digital AV apparatuses and the like that record and reproduce video and audio data by using digital technology, and magnetic disk apparatuses having large capacities are desired to record and reproduce digital AV data that is enormously large in amount.

Conventionally, when data was read and written in a hard disk apparatus provided with an IDE (Integrated Device Electronics) interface, a microcomputer, to which the hard disk apparatus was connected, was used to entirely control the hard disk apparatus.

Hence, the CPU was unable to perform processing other than reading/writing in the hard disk apparatus in a period from the start to the end of data reading/writing. In other words, the load on the microcomputer required to control the hard disk apparatus was high.

Furthermore, when digital AV information was recorded/reproduced as described above, since the digital AV information was data being enormously large in amount and sent continuously without interruption, the load on the microcomputer required for controlling the hard disk apparatus became high significantly, and the microcomputer was required to keep controlling the hard disk apparatus at all times in order to record/reproduce the digital AV information.

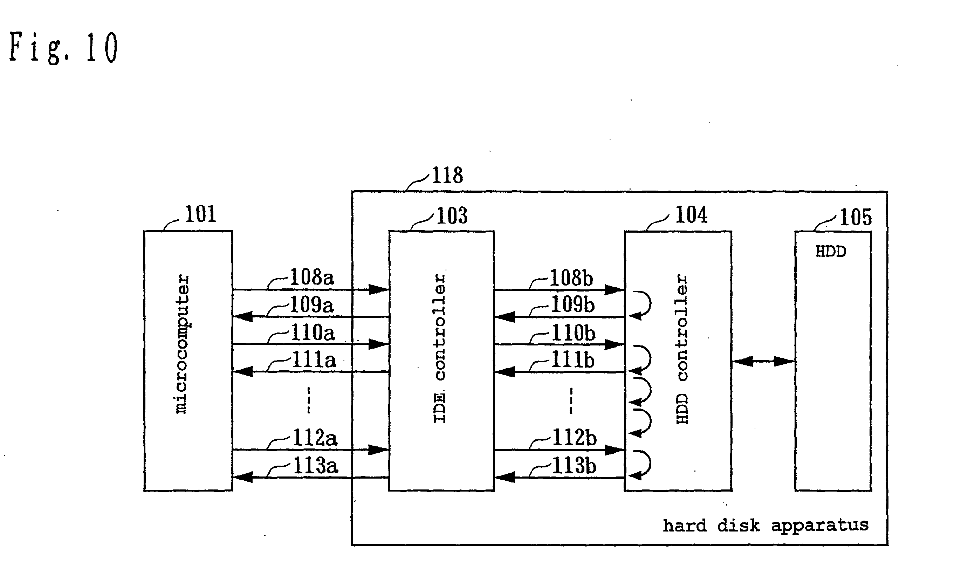

As a conventional hard disk apparatus that is used to reduce the above-mentioned load on the CPU, a hard disk apparatus 118 shown in FIG. 10 has been proposed.

The conventional hard disk apparatus 118 will be described below referring to FIG. 10.

The hard disk apparatus 118 comprises an IDE controller 103, a HDD controller 104 and a HDD 105.

In addition, a microcomputer 101 is connected to the hard disk apparatus 118.

The IDE controller 103 is means of controlling the HDD controller 104 having an IDE interface not shown.

The HDD controller 104 is means, having an IDE interface, of carrying out control so that the HDD 105 reads/writes data by assigning designated LBAs (logical block addresses) to tracks and sectors of a magnetic disk medium and by positioning the magnetic head of the HDD 105.

The HDD 105 is a hard disk having the magnetic disk medium.

The microcomputer 101 is means of giving data reading/writing commands to the IDE controller 103.

Next, the operation of this kind of conventional hard disk apparatus 118 will be described.

The operation at the time when the microcomputer 101 reads 2 Mbytes of data from the hard disk apparatus 118 will be described.

In the IDE interface, the maximum data size that can be transferred by one command exchange is 128 kbytes. In addition, it is assumed that data to be read has been stored at address 0 and the following addresses.

Hence, the microcomputer 101 first issues a read command 108a used to read 128 kbytes of data from address 0 and the following addresses to the IDE controller 103. Immediately after issuing the read command 108a, the microcomputer 101 is ready to carry out other processes.

After receiving the read command 108a, the IDE controller 103 issues a read command 108b used to read 128 kbytes of data from address 0 and the following addresses to the HDD controller 104.

After receiving the read command 108b, the HDD controller 104 carries out control so that the HDD 105 makes preparation for reading.

Even while the HDD 105 makes preparation for reading, the IDE controller 103 keeps monitoring the state of the HDD 105 at all times to recognize whether the HDD 105 is ready to read the data.

When IDE controller 103 detects that the HDD 105 is ready to read data, 128 kbytes of data is read sequentially. In addition, while the data is read, the IDE controller 103 carries out error check to see whether the data has been read normally. The IDE controller 103 stores the data read from the HDD controller 104 in memory. After receiving a command end notice 109b from the HDD controller 104 and completely storing all the data having been read in the memory, the IDE controller 103 issues a command end notice 109a to the microcomputer 101.

After receiving the command end notice 109a from the IDE controller, the microcomputer 101 issues a read command 110a used to read 128 kbytes of data from address 128 kbytes and the following addresses.

Immediately after issuing the read command 110a, the microcomputer 101 is ready to carry out other processes.

By an operation similar to that carried out when the microcomputer issued the read command 108a, the IDE controller 103 stores the data read from the HDD controller 104 in the memory. After receiving a command end notice 111b from the HDD controller 104 and completely storing all the data having been read in the memory, the IDE controller 103 issues a command end notice 111a to the microcomputer 101.

This kind of operation is repeated; in the end, the microcomputer 101 issues a read command 112a used to read 128 kbytes of data from address 1920 kbytes and the following addresses.

By an operation similar to that described above, the IDE controller 103 issues a read command 112b used to read 128 kbytes of data from address 1920 kbytes and the following addresses to the HDD controller 104.

The IDE controller 103 stores the data read from the HDD controller 104 in the memory. After receiving a command end notice 113b from the HDD controller 104 and completely storing all the data having been read in the memory, the IDE controller 103 issues a command end notice 113a to the microcomputer 101.

By issuing read commands 16 times in total as described above, the microcomputer 101 can read 2 Mbytes of data from address 0 and the following addresses.

When writing 2 Mbytes of data from address 0 and the following addresses in the hard disk apparatus 118, it is necessary for the microcomputer 101 to issue commands 16 times in a similar way.

By using this conventional hard disk apparatus 118, when data is read from or written to the hard disk apparatus 118, it is not necessary that the microcomputer 101 continuously controls and monitors the hard disk apparatus 118 at all times in the period from the issue of a command to the reception of an end notice. It is thus possible to obtain a significant effect wherein the load of the microcomputer 101 can be reduced.

Furthermore, in the IDE interface, the unit of data transfer is based on a fixed block unit. In other words, one block has 512 bytes. Therefore, when variable-length data, the data size of which is not N (N: a positive integer) times one block, has been recorded and when this variable-length data is read, the addresses in a buffer memory are manipulated.

However, in the first conventional technology, the conventional hard disk apparatus is designed so as to be connectable to various kinds of PCs and usable therewith. Therefore, a general-purpose format is adopted as a data-recording format; therefore, this format is not a recording format particularly suited for recording/reproducing AV data.

In other words, the recording format of the conventional hard disk apparatus is not a recording format suited for recording/reproducing AV data, thereby causing a problem.

Moreover, the recording format of the conventional hard disk apparatus has the special reproduction table that is used for attaining special reproduction, and the special reproduction table has been recorded in an area different from that for the AV data. Therefore, when carrying out special reproduction, it is necessary to alternately carry out the process of reading the special reproduction table and the process of reading the AV data used for special reproduction.

Hence, the seek operation of the hard disk apparatus occurs frequently. During the seek operation, the hard disk apparatus cannot read or write data. In addition, after the seek operation is carried out, a magnetic disk rotation wait state occurs until a sector wherein reading/writing is performed reaches the head. During this rotation wait state, data cannot be read or written, either.

As described above, the longer the time for the seek operation, the longer the time for reading/writing; therefore, in the recording format of the conventional hard disk apparatus, it takes time to read AV data and to refer to the special reproduction table.

In other words, the recording format of the conventional hard disk apparatus has a problem of taking time to read data when special reproduction is performed.

In addition, in the second conventional technology, when reading 2 Mbytes of data for example, it is necessary to issue commands at least 16 times to the hard disk apparatus 118. Furthermore, when reading 2 Mbytes of data, it is necessary to issue commands at least 16 times to the hard disk apparatus 118. When reading or writing 4 Mbytes of data, it is necessary to issue commands 32 times.

In other words, as the amount of data to be read or written becomes large, just as in the case of AV data, the number of times a data reading or writing command is issued increases, and the overhead of the interface increases, whereby the usability of the CPU of the microcomputer 101 increases.

In other words, in the conventional hard disk apparatus, when data being large in amount, such as AV data, is read or written, there is a problem of increasing the load on the CPU.

In addition, in the conventional hard disk apparatus, when reading variable-length data, unnecessary data is also stored in the buffer memory; therefore, address manipulation becomes complicated, thereby causing a problem of low efficiency.

Furthermore, when recording or reproducing AV data, it is necessary to transfer the AV data continuously without interruption. However, in the conventional hard disk apparatus, when an AV data reading error occurs during reproduction, procedural steps are taken, for example, the reading process is interrupted, error occurrence is notified to the microcomputer 101, and error recovery is carried out; hence, the AV data cannot be transferred continuously without interruption.

In other words, in the conventional hard disk apparatus, when an AV data reading error occurs during reproduction, there is a problem of being unable to continuously process the AV data.

### DISCLOSURE OF THE INVENTION

In consideration of the above-mentioned problems, the present invention is intended to provide a recording format suited for recording/reproducing AV data.

In addition, in consideration of the above-mentioned problems, the present invention is intended to provide a recording format wherein long time is not taken for data reading when special reproduction is carried out.

In consideration of the above-mentioned problems, the present invention is intended to provide a recording apparatus, a reproducing apparatus and a program wherein the number of times a data reading or writing command is issued does not increase even when the amount of data becomes large, just as in the case of AV data.

Furthermore, in consideration of the above-mentioned problems, the present invention is intended to provide a recording apparatus, a reproducing apparatus and a program wherein pointer management does not become complicated and data can be read efficiently when variable-length data is read.

Still further, in consideration of the above-mentioned problems, the present invention is intended to provide a recording apparatus, a reproducing apparatus and a program wherein AV data can be processed continuously even when an AV data reading error occurs during reproduction.

To solve the problem described above, a 1st invention of the present invention (corresponding to Claim 1) is a recording format that is used when AV data is recorded on a disk, wherein
a disk access unit, the minimum unit for continuously gaining access to the disk, has a fixed length and is divided into a header portion and an AV data portion.

A 2nd invention of the present invention (corresponding to Claim 2) is a recording format in accordance with the 1st present invention, wherein at least one of the chain information, special reproduction information and PSI information of said disk access unit is described in said header portion.

A 3rd invention of the present invention (corresponding to Claim 3) is a recording format in accordance with the 2nd invention, wherein said special reproduction information includes at least one of information on the head position, kind and length of a frame, information on a frame occurrence pattern, information on the integration value of the number of frames occurring from the start of recording and information on the number of frames included in said disk access unit.

A 4th invention of the present invention (corresponding to Claim 4) is a recording format in accordance with the 2nd or 3rd invention, wherein the chain information of said disk access unit is information designating the positions of the preceding and subsequent disk access units of said disk access unit or information designating the positions of one or more subsequent disk access units of said disk access unit.

A 5th invention of the present invention (corresponding to Claim 5) is a recording format in accordance with any one of the 1st to 4th inventions, wherein MPEG transport stream data is described in said AV data portion.

A 6th invention of the present invention (corresponding to Claim 6) is a recording format in accordance with any one of the 1st to 5th inventions, wherein said fixed length is 2 Mbytes.

A 7th invention of the present invention (corresponding to Claim 7) is a recording format in accordance with any one of the 1st to 5th inventions, wherein the length of said disk access unit can be changed depending on the performance of a hard disk.

An 8th invention of the present invention (corresponding to Claim 8) is a reproducing apparatus comprising:
reading means of reading data recorded on a recording medium,
a predetermined interface of relaying data from said reading means in fixed block units,
data selecting means of omitting unnecessary data included in said fixed blocks relayed by said interface at the time when said data to be reproduced is read from said interface thereby to have only said data to be reproduced, and
buffer means of temporarily storing said data to be reproduced that is output from said data selecting means, wherein
said data to be reproduced that is recorded in said buffer means is read by another apparatus.

A 9th invention of the present invention (corresponding to Claim 9) is a reproducing apparatus comprising:
reproducing means of reproducing AV data recorded on a recording medium, and
complementing means of complementing dropouts occurred in said reproduced AV data and outputting the AV data, said dropouts of which have been complemented.

A 10th invention of the present invention (corresponding to Claim 10) is a reproducing apparatus in accordance with the 9th invention, wherein said complementing means complements said dropouts of said AV data by using normally reproduced portions of said AV data.

An 11th invention of the present invention (corresponding to Claim 11) is a reproducing apparatus comprising:
reproducing means of reproducing data from a recording medium on which data has been recorded,
a predetermined interface of relaying control information and said data to said reproducing means,
control means of transferring said control information and said data to said interface and monitoring the state of said reproducing means, and
command control means of creating said control information from a predetermined command used to reproduce data and transferring said control information to said control means, wherein
said predetermined command is sent from a microprocessor to which said reproducing apparatus is connected,
when it is assumed that the amount of data transfer by said control means by using one command is M and that the amount of data transfer by said command control means by using one command is N, N and M satisfy N > M,
said control means notifies the state of said reproducing means to said command control means, and
said command control means notifies the completion of the processing of said predetermined command to said microprocessor.

A 12th invention of the present invention (corresponding to Claim 12) is a reproducing apparatus comprising:
reproducing means of reproducing data from a recording medium on which data has been recorded,
a predetermined interface of relaying control information and said data to said reproducing means, and
control means of transferring said control information and said data to said interface and monitoring the state of said reproducing means, wherein
to command control means of creating said control information from a predetermined command sent from a microprocessor, to which said reproducing apparatus is connected, and used to reproduce data and transferring said control information to said control means,
said control means notifies the state of said reproducing means,
said command control means notifies the completion of the processing of said predetermined command to said microprocessor, and
when it is assumed that the amount of data transfer by said control means by using one command is M and that the amount of data transfer by said command control means by using one command is N, N and M satisfy N > M.

A 13th invention of the present invention (corresponding to Claim 13) is a reproducing apparatus in accordance with the 11th or 12th invention, wherein said control means directly transfers said data reproduced from said reproducing means and stored in said interface to a predetermined recording medium other than said recording medium.

A 14th invention of the present invention (corresponding to Claim 14) is a reproducing apparatus in accordance with the 13th invention, wherein
said reproducing means, outputting data in fixed block units, comprises:
data selecting means of omitting unnecessary data included in said fixed blocks from said interface thereby to have only said data to be reproduced, and
buffer means of temporarily storing said data to be reproduced that is output from said data selecting means, wherein
said control means directly transfers said data to be reproduced and stored in said buffer means to said other predetermined recording medium.

A 15th invention of the present invention (corresponding to Claim 15) is a reproducing apparatus in accordance with any one of the 11th to 14th inventions, wherein said predetermined command is used to give a direction to gain access to a desired position on said recording medium.

A 16th invention of the present invention (corresponding to Claim 16) is a reproducing apparatus in accordance with any one of the 11th to 15th inventions, wherein said predetermined command is used to give a direction to transfer data of a desired size.

A 17th invention of the present invention (corresponding to Claim 17) is a reproducing apparatus in accordance with any one of the 8th, 11th to 16th inventions, wherein said interface is an IDE interface or a SCSI interface.

A 18th invention of the present invention (corresponding to Claim 18) is a recording apparatus comprising:
recording means of recording data on a recording medium on which data is recorded,
a predetermined interface of relaying control information and said data to said recording means,
control means of transferring said control information and said data to said interface and monitoring the state of said recording means, and
command control means of creating said control information from a predetermined command used to record data and transferring said control information to said control means, wherein
said predetermined command is sent from a microprocessor to which said recording apparatus is connected,
when it is assumed that the amount of data transfer by said control means by using one command is M and that the amount of data transfer by said command control means by using one command is N, N and M satisfy N > M,
said control means notifies the state of said recording means to said command control means, and
said command control means notifies the completion of the processing of said predetermined command to said microprocessor.

A 19th invention of the present invention (corresponding to Claim 19) is a recording apparatus comprising:
recording means of recording data on a recording medium on which data is recorded,
a predetermined interface of relaying control information and said data to said recording means, and
control means of transferring said control information and said data to said interface and monitoring the state of said recording means, wherein
to command control means of creating said control information from a predetermined command sent from a microprocessor, to which said recording apparatus is connected, and used to record data and transferring said control information to said control means,
said control means notifies the state of said recording means,
said command control means notifies the completion of the processing of said predetermined command to said microprocessor, and
when it is assumed that the amount of data transfer by said control means by using one command is M and that the amount of data transfer by said command control means by using one command is N, N and M satisfy N > M.

A 20th invention of the present invention (corresponding to Claim 20) is a recording apparatus in accordance with the 18th or 19th invention, wherein said control means directly transfers said data stored in said predetermined recording medium to said interface.

A 21st invention of the present invention (corresponding to Claim 21) is a recording apparatus in accordance with any one of the 18th to 20th inventions, wherein said predetermined command is used to give a direction to gain access to a desired position on said recording medium.

A 22nd invention of the present invention (corresponding to Claim 22) is a recording apparatus in accordance with any one of the 18th to 21st inventions, wherein said predetermined command is used to give a direction to transfer data of a desired size.

A 23rd invention of the present invention (corresponding to Claim 23) is a recording apparatus in accordance with any one of the 18th to 22nd inventions, wherein said interface is an IDE interface or a SCSI interface.

A 24th invention of the present invention (corresponding to Claim 24) is a program of functioning a computer as the whole or part of said reproducing apparatus set forth in the 8th invention, comprising:
reading means of reading data recorded on a recording medium,
a predetermined interface of relaying data from said reading means in fixed block units,
data selecting means of omitting unnecessary data included in said fixed blocks relayed by said interface at the time when said data to be reproduced is read from said interface thereby to have only said data to be reproduced, and
buffer means of temporarily storing said data to be reproduced that is output from said data selecting means.

A 25th invention of the present invention (corresponding to Claim 25) is a program of functioning a computer as the whole or part of said reproducing apparatus set forth in the 9th invention, comprising:
reproducing means of reproducing AV data recorded on a recording medium, and
complementing means that complements dropouts occurred in said reproduced AV data and outputs the AV data, said dropouts of which have been complemented.

A 26th invention of the present invention (corresponding to Claim 26) is a program of functioning a computer as the whole or part of said reproducing apparatus set forth in the 11th invention, comprising:
reproducing means of reproducing data from a recording medium on which data has been recorded,
a predetermined interface of relaying control information and said data to said reproducing means,
control means of transferring said control information and said data to said interface and monitoring the state of said reproducing means, and
command control means of creating said control information from a predetermined command used to reproduce data and transferring said control information to said control means.

A 27th invention of the present invention (corresponding to Claim 27) is a program of functioning a computer as the whole or part of said reproducing apparatus set forth in the 12th invention, comprising:
reproducing means of reproducing data from a recording medium on which data has been recorded,
a predetermined interface of relaying control information and said data to said reproducing means, and
control means of transferring said control information and said data to said interface and monitoring the state of said reproducing means.

A 28th invention of the present invention (corresponding to Claim 28) is a program of functioning a computer as the whole or part of said recording apparatus set forth in the 18th invention, comprising:
recording means of recording data on a recording medium on which data is recorded,
a predetermined interface of relaying control information and said data to said recording means,
control means of transferring said control information and said data to said interface and monitoring the state of said recording means, and
command control means of creating said control information from a predetermined command used to record data and transferring said control information to said control means.

A 29th invention of the present invention (corresponding to Claim 29) is a program of functioning a computer as the whole or part of said recording apparatus set forth in the 19th invention, comprising:
recording means of recording data on a recording medium on which data is recorded,
a predetermined interface of relaying control information and said data to said recording means, and
control means of transferring said control information and said data to said interface and monitoring the state of said recording means.

### BRIEF DESCRIPTION OF THE DRAWINGS

FIG. 1 is a block diagram showing the configuration of a HDD system in accordance with a first embodiment of the present invention;
FIG. 2 is a block diagram showing the detailed configuration of the HDD system in accordance with the first embodiment of the present invention;
FIG. 3 is a view showing a recording format in accordance with the first embodiment of the present invention;
FIG. 4 is a view showing chain information constituting the recording format in accordance with the first embodiment of the present invention;
FIG. 5 is a view showing special reproduction information constituting the recording format in accordance with the first embodiment of the present invention;
FIG. 6 is a view illustrating an occurrence pattern of frames used as part of the special reproduction information in accordance with the first embodiment of the present invention;
FIG. 7 is a block diagram showing the configuration of a hard disk apparatus in accordance with a second embodiment of the present invention;
FIG. 8 is a block diagram showing the configuration of a hard disk apparatus in accordance with a third embodiment of the present invention;
FIG. 9 is a block diagram showing the configuration of a hard disk apparatus in accordance with a fourth embodiment of the present invention; and
FIG. 10 is a block diagram showing the configuration of the conventional hard disk apparatus.

### EXPLANATION OF REFERENCE CODES

- 1: IEEE1394 bus
- 2: HDD system
- 3: STB
- 4: antenna
- 5: monitor
- 6: IEEE1394 interface
- 8: AV block
- 9: HDD controller
- 10: HDD
- 11: spindle motor
- 12: disk medium
- 13: actuator
- 14: head
- 15: head amp
- 16: tuner
- 17: descrambler
- 18: transport decoder
- 19: AV decoder
- 20: IEEE1394 interface
- 21: AV-ASIC
- 22: AV formatter
- 23: recording analyzer
- 24: reproduction analyzer
- 25: SD-RAM
- 26: microprocessor
- 27: disk access unit
- 28: header
- 29: MEPG transport stream
- 30: chain information
- 31: special reproduction information
- 32: PSI information
- 33: transport packet with time stamp
- 34: time stamp header
- 35: transport packet
- 40: position of preceding disk access unit
- 41: position of subsequent disk access unit
- 42: total number nd of subsequent disk access units that can be referred to
- 43: position of first subsequent disk access unit
- 44: position of nd-th subsequent disk access unit
- 45: frame occurrence pattern
- 46: total number nf of head positions of frames included in this disk access unit
- 47: head position of first frame
- 48: length of frame
- 49: kind of frame
- 50: integration value of number of frames
- 51: head position of nf-th frame
- 52: length of frame
- 53: kind of frame
- 54: integration value of frames
- 101: microcomputer
- 102: command controller
- 103: IDE controller
- 104: HDD controller
- 105: HDD
- 106, 108a, 108b, 110a, 110b, 112a, 112b: read command
- 107,109a, 109b, 111a, 111b, 113a, 113b: command end notice
- 114: data omission circuit
- 115: buffer memory
- 116,117, 118: hard disk apparatus

### THE BEST MODE FOR CARRYING OUT THE INVENTION

Embodiments of the present invention will be described below referring to the drawings.

### (First embodiment)

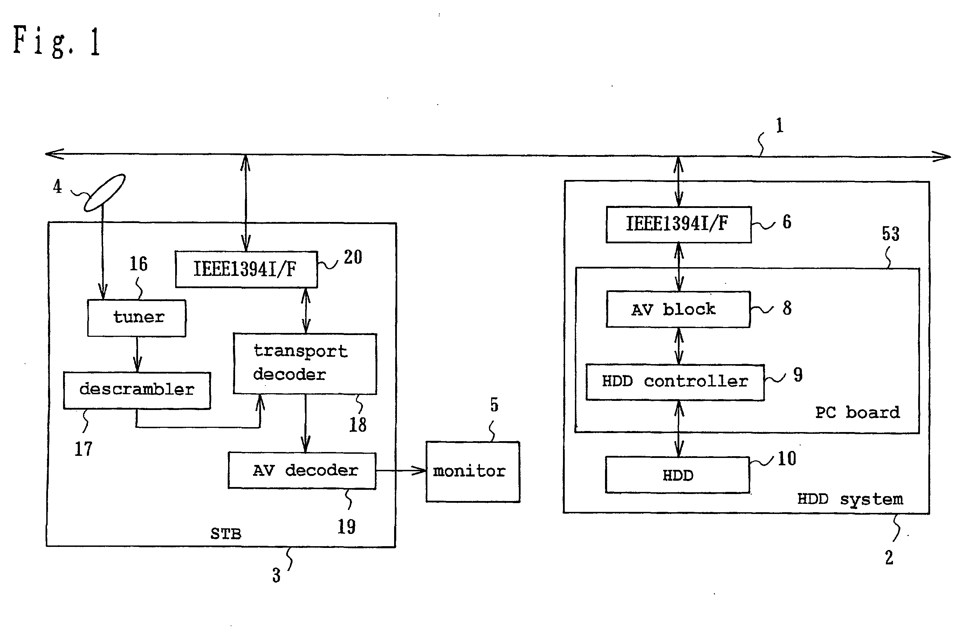

FIG. 1 shows the configuration of a HDD system in accordance with a first embodiment.

A HDD system 2 is connected to an IEEE1394 bus 1. In addition, an STB 3 is also connected to the IEEE1394 bus 1. Furthermore, an antenna 4 and a monitor 5 are connected to the STB 3.

The IEEE1394 bus 1 is an IEEE standard for High performance Serial Bus described in IEEE1394-1995, which is used to relay the transfer of AV data and the exchange of commands.

The HDD system 2 is an apparatus of recording and/or reproducing AV data while exchanging the AV data with the STB 3 via the IEEE1394 bus 1. The STB 2 is a Set Top Box (satellite broadcast receiver).

The HDD system 2 comprises an IEEE1394 interface 6, an AV block 8, a HDD controller 9 and a HDD 10. The AV block 8 and the HDD controller 9 are integrated on a PC board 53.

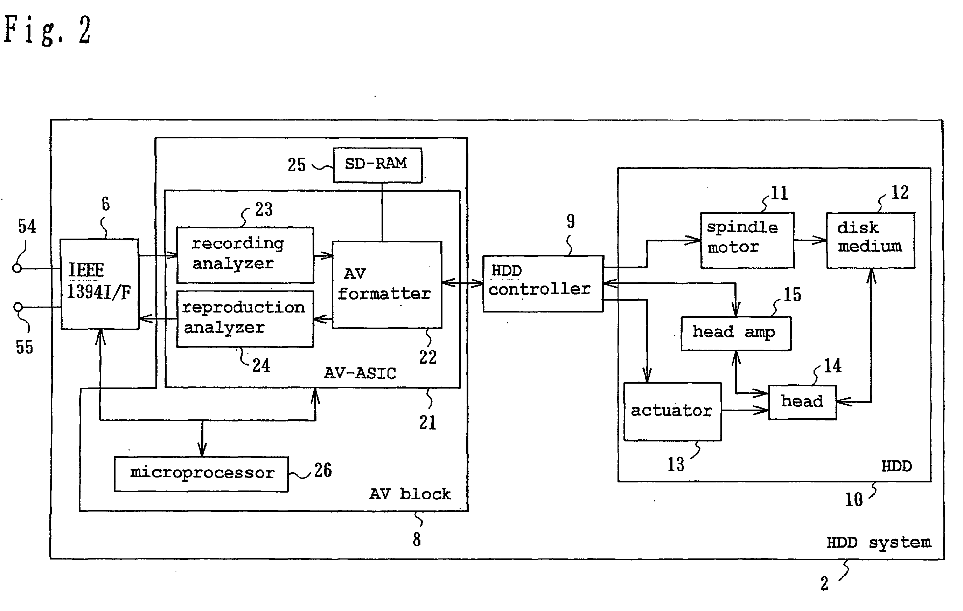

FIG. 2 shows the detailed configuration of the HDD system 2.

The IEEE1394 interface 6 has a recording port 54 and a reproduction port 55.

The AV block 8 comprises a recording analyzer 23, a reproduction analyzer 24 and an AV formatter 22.

The HDD 10 comprises a spindle motor 11, a disk medium 12, an actuator 13, a head 14 and a head amp 15.

The STB 3 comprises a tuner 16, a descrambler 17, a transport decoder 18, an AV decoder 19 and an IEEE1394 interface 20.

The IEEE1394 interface 6 constituting the HDD system 2 is an interface used to exchange commands and AV data with external apparatuses via the IEEE1394 bus 1, and has a function of carrying out authentication and encryption.

The recording port 54 is a port used during recording. The reproduction port 55 is a port used during reproduction.

The AV block 8 is means of being capable of processing AV data of two or more channels simultaneously by designating LBAs (logical block addresses) and gaining access to the disk medium 12.

The recording analyzer 23 constituting the AV block is means of creating information used when special reproduction is carried out by analyzing the MPEG2 transport stream being input, adding time stamps to the transport packets of the MPEG2 transport stream and transferring the packets to the AV formatter 22.

The reproduction analyzer 24 is means of separating the time stamps added to the transport packets of the MPEG2 transport stream transferred from the AV formatter 22, transferring the transport packets at time intervals designated on the time stamps to the IEEE1394 interface 6, and reconfiguring the MPEG2 transport stream transferred from the AV formatter 22 so as to conform to the grammar of the MPEG2 during special reproduction.

The AV formatter 22 is means of temporarily storing the MPEG2 transport stream and special reproduction information transferred from the recording analyzer in the SD-RAM 25 during AV data recording, and issuing a command to the HDD controller 9 when a constant amount of data is stored in the SD-RAM 25, thereby to designate the LBAs and the number of sectors, in which writing is to be carried out, to be transferred to the HDD controller 9. In addition, during AV data reproduction, the AV formatter is means of temporarily transferring the data having been read in disk access units from the HDD controller 9 to the SD-RAM 25, and transferring the data having been recorded in the SD-RAM 25 to the reproduction analyzer 24 depending on request from the reproduction analyzer 24.

The SD-RAM 25 is a synchronous dynamic RAM that temporarily stores data.

The HDD controller 9 is means of assigning designated LBAs to the cylinder, head and sectors, controlling the actuator 13 and the spindle motor 11, and carrying out signal processing in order to record/reproduce data on the disk medium 12 via the head 14 and the head amp 15.

The head 14 constituting the HDD 10 is means of recording/reproducing signals on the disk medium 12.

The spindle motor 11 is means of rotating the disk medium 12 at a constant speed.

The actuator 13 is means of positioning the head 14 at a target position of the disk medium 12.

The head amp 15 is means of amplifying a signal read by the head 14, amplifying the signal sent from the HDD controller 37, and supplying the signal to the head 14.

In addition, the IEEE1394 interface 20 constituting the STB3 is means of exchanging AV data and commands with external apparatuses connected to the IEEE1394 bus 1 via the IEEE1394 bus 1.

The tuner 16 is means of receiving and demodulating a BS broadcast.

The descrambler 17 is means of descrambling demodulated data in the case when the data is scrambled.

The transport decoder 18 is means of separating the transport packets of the descrambled MPEG2 transport stream.

The AV decoder 19 is means of decompressing the separated AV data and converting the data into an analog signal.

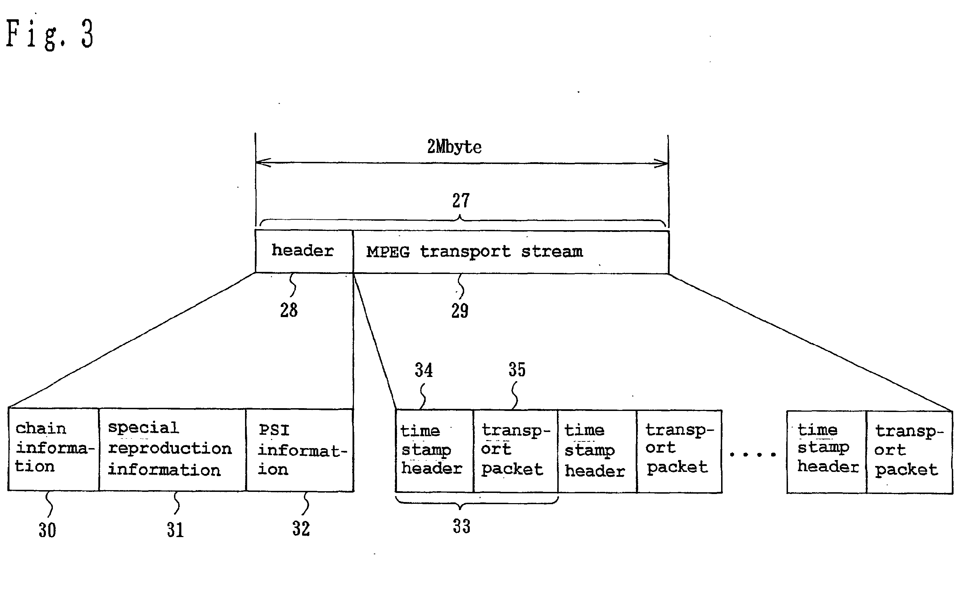

FIG. 3 shows a recording format in accordance with this embodiment that is used when the HDD system 2 records AV data.

A disk access unit 27 has a fixed length of 2 Mbytes, for example, and comprises continuous sectors.

Furthermore, the disk access unit 27 is divided into a header 28 and an MPEG2 transport stream 29.

In the header 28, chain information 30, special reproduction information 31 and PSI information 32 are recorded.

The chain information 30 is information required to gain access to the preceding and subsequent disk access units 27; the head positions of the preceding and subsequent disk access units 27 are designated by LBAs; the special reproduction information 31 is information used to select frames used when special reproduction is carried out; the PSI information 32 is information required to classify the transport packets of the MPEG2 transport stream having been multiplexed.

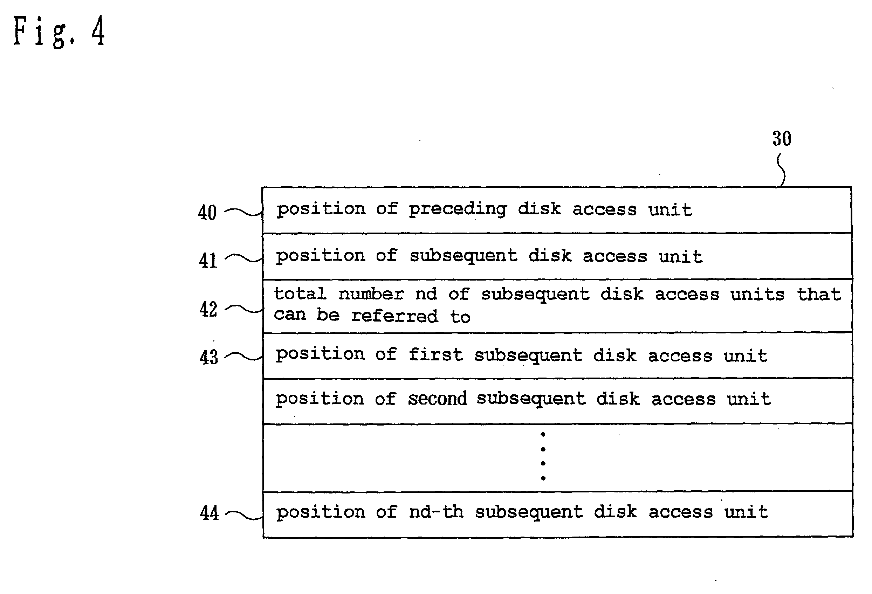

FIG. 4 shows the details of the chain information 30.

The position 40 of the preceding disk access unit is information required to gain access to the immediately preceding disk access unit in a direction wherein more upcoming AV data is stored and information wherein the head position of the preceding disk access unit is designated by an LBA.

The position 41 of the subsequent disk access unit is information required to gain access to the next disk access unit in a direction wherein more precedent AV data is stored and information wherein the head position of the next disk access unit is designated by an LBA.

The total number nd of the subsequent disk access units that can be referred to is information wherein the head positions of nd (nd: an integer of 1 or more) subsequent disk access units in a direction wherein more precedent AV data is stored are designated subsequently, thereby indicating that the nd disk access units can be accessed directly.

The position 43 of the first subsequent disk access unit is information in which the head position of the next disk access unit in a direction wherein more precedent AV data is stored is designated by an LBA.

The position 44 of the second subsequent disk access unit is information in which the head position of the second subsequent disk access unit in a direction wherein more precedent AV data is stored is designated by an LBA.

The position 44 of the nd-th subsequent disk access unit is information in which the position of the nd-th subsequent disk access unit in a direction wherein more precedent AV data is stored is designated by an LBA. By using the information indicating the positions of the above-mentioned plural subsequent disk access units, reviewing can be carried out efficiently.

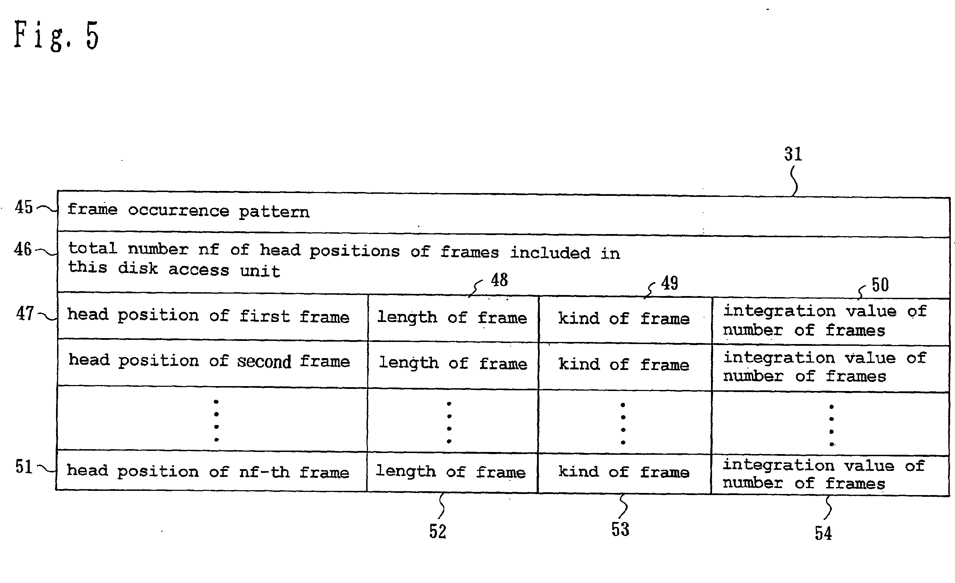

FIG. 5 shows the details of the special reproduction information 31.

A frame occurrence pattern 45 is information indicating how the type of frame occurs. In other words, the pattern is information indicating in what order I-frame (Intra-frame), P-frame (Predictive-frame) and B-frame (Bidirectionally predictive-frame) occur. In other words, it is possible to describe this kind of pattern by using the total number of the frames in a GOP (Group of pictures) and the periods of occurrences of the I- and P-frames.

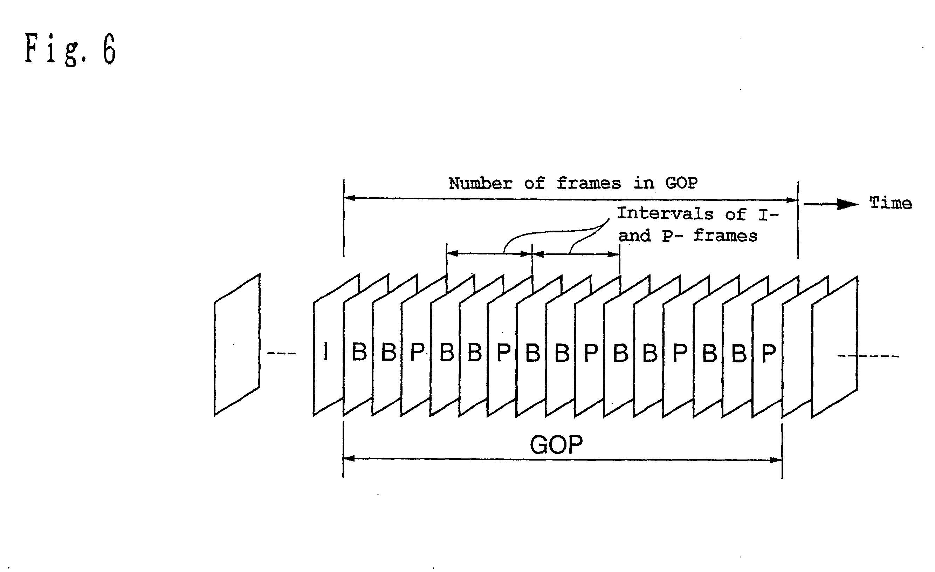

For example, in the case when the GOP has 15 frames and when the period in which the I- and P-frames occur is 3, the frame occurrence pattern 45 is described such that the number of the GOP frames is 15 and such that the period in which the I- and P-frames occur is 3. In the case of this example, the I-, P-and B-frames occur in the sequence shown in FIG. 6.

For example, "100000000000000" is described as the I-frame occurrence pattern, and "000100100100100" is described as the P-frame occurrence pattern. In the I-frame occurrence pattern of "100000000000000," 1 indicates that the frame is an I-frame, and 0 indicates that the frame is a frame other than the I-frame. Furthermore, in the P-frame occurrence pattern of "000100100100100," 1 indicates that the frame is a P-frame, and 0 indicates that the frame is a frame other than the P-frame.

The total number nf 46 of the head positions of the frames included in this disk access unit is information indicating the total number of frames, the head positions of which are included in this disk access unit.

The head position 47 of the first frame is the head position of the first frame, the head position of which is included in the disk access unit, and is a value indicated by the number of bytes from the head of the disk access unit 27. The length 48 of the frame is the length of this frame and is a value indicated by the number of bytes. The kind 49 of frame is information indicating that the frame is I-frame, P-frame or B-frame. The integration value 50 of the number of frames is information indicating the number of frames counted from the head of the AV data to the frame.

From the integration value 50 of the number of frames, it is possible to know relative time from the time of recording start. For example, in the NTSC, one frame takes 29.97 ms; in the PAL, one frame takes 25 ms. Conversely, it is possible to carry out reproduction by designating time from the time of recording start.

These kinds of nf pieces of information regarding frames, the head positions of which are included in the disk access unit, are described.

In this way, in the special reproduction information 31, the analysis states of the AV data are represented in a table.

In the PSI information 32, the classification of the transport packets of the MPEG2 transport stream is described. By using the PSI information 32, in the case when programs on plural channels are multiplexed and recorded in one MPEG2 transport stream, a program on a specific channel can be selected easily.

Transport packets with time stamps are stored in the MPEG transport stream 29. A transport packet 33 with a time stamp comprises a time stamp header 34 and a transport packet 35.

Next, the operation of this embodiment will be described.

First, the recording format will be described.

Parameters representing the performance of the HDD 10, described later, are a track pitch, a recording density, the rotation speed of the disk medium 12, etc. In other words, the performance of the HDD 10 is determined by the combination of these parameters. The HDD system 2 of this embodiment uses the recording format shown in FIGS. 3, 4 and 5, and this recording format is a recording format capable of not wasting but utilizing the performance of the HDD 10 as much as possible. Hence, the AV data can thus be recorded and reproduced efficiently.

In other words, in the case of transferring AV data, continuous transfer is very important. If the HDD system 2 cannot read the AV data within time when the AV decoder 19 decodes the AV data, images to be displayed on the monitor 5 and sound become interrupted. In addition, if the recording by the HDD system 2 is slower than the transfer of the AV data from the IEEE1394 interface 20, the buffer overflows, and the recorded AV data has dropouts. If continuous transfer is not attained securely as described above, the AV data cannot be recorded or reproduced normally.

In the recording format shown in FIGS. 3, 4 and 5, the AV data and the information of the header 28, such as the special reproduction information 31, have been recorded altogether in one disk access unit; hence, as described in the explanation of the conventional technology, the seek operation of the HDD 10 occurs less frequently than a case wherein the information of the header 28 is recorded in an area different from that for the AV data. In the middle of the seek operation, no data can be read or written; therefore, the fact that the seek operation occurs less frequently means that the transfer rate during the recording or reading of data can be made higher.

In addition, since the sectors constituting the disk access unit 27 are continuous, no seek operation occurs in the middle of the recording or reading of the disk access unit 27. In other words, since the header 28 and the MPEG transport stream 29 have been recorded altogether in the disk access unit 27, the data can be recorded or read efficiently.

Furthermore, in this embodiment, when the length of the disk access unit 27 is given, the recording or reading rate of the HDD system 2 is measured beforehand, and the length of the disk access unit 27 capable of ensuring the continuous transfer of the AV data is adopted. As a result, it is possible to ensure the continuous transfer of the AV data.

Moreover, the disk access unit 27 has the fixed length; hence, when data is recorded or read in the disk access unit 27, address calculations become easy.

Still further, although the data in the I-frame used for special reproduction must be extracted when the special reproduction is carried out, the I-frame can be extracted efficiently by referring to the special reproduction information 31 shown in FIG. 5.

Next, how to use this recording format will be described together with the operation of the HDD system 2.

First, the operation wherein AV data sent from a BS broadcast station is received by the STB 2 and recorded by the HDD system 2 will be described.

The MPEG2 transport stream is sent on a broadcast wave from the BS broadcast station. The antenna 4 converts this broadcast wave into an electrical signal.

The tuner 16 receives this electrical signal and demodulates it.

Pay broadcast programs and the like have been scrambled; hence, in the case when the demodulated MPEG2 transport stream has been scrambled, the descrambler 17 descrambles the demodulated MPEG2 transport stream.

In addition, the transport decoder 18 separates the MPEG2 transport packets.

The IEEE1394 interface 20 creates isochronous packets from the separated MPEG2 transport packets and transfers them to the IEEE1394 bus 1.

On the other hand, in the HDD system 2, the IEEE1394 interface 6 issues an authentication request to the IEEE1394 interface 20. When the authentication is carried out successfully, the isochronous packets transferred from the IEEE1394 interface 20 to the IEEE1394 bus 1 are identified according to the channel number of the recording port 54 and received therefrom. Furthermore, the received isochronous packets are converted into the MPEG2 transport stream; in the case when AV data is encrypted on the basis of an asserted copyright or the like, the AV data is decrypted and transferred to the recording analyzer 23.

The recording analyzer 23 adds time stamps to the transport packets sent from the IEEE1394 interface 6. In addition, the recording analyzer analyzes the MPEG2 transport stream and creates the special reproduction information 31 and the PSI information 32 shown before in FIGS. 3 and 5.

The AV formatter 22 arbitrates data transfer to the recording analyzer 23, the reproduction analyzer 24 and the HDD controller 9. When the transport packets, the special reproduction information 31 and the PSI information of the MPEG2 transport stream are transferred from the recording analyzer 23, the AV formatter receives and temporarily stores them in the SD-RAM 25. The AV formatter 22 then creates the chain information 30 and stores it in the SD-RAM 25.

Furthermore, when a constant amount of data, that is, an amount corresponding to the length of the disk access unit 27, is stored in the SD-RAM 25, the AV formatter 22 transfers the data stored in the SD-RAM 25 to the HDD controller 9, designates a recording start LBA and the number of sectors in which the data is to be written, and issues a command used to write the data on the disk medium 12. When the AV formatter 22 records the AV data, the data is recorded in the disk access units in accordance with the recording format described above and shown in FIG. 3.

On the other hand, the HDD controller 9 controls the rotation speed of the spindle motor 39 and also controls the actuator 13. The HDD controller 9 converts the transferred data into a recording signal in accordance with directions from the AV formatter 22 and sends it to the head amp 15.

The HDD controller 9 controls the actuator 13 so as to position the head 14 at the next writing position of the disk medium 12. Furthermore, the head amp 15 amplifies the signal to a predetermined magnification, and the head 14 records the signal on the disk medium 12. When the recording on the disk medium 12 is completed, the HDD controller 9 notifies the completion of the recording to the AV formatter 22.

After knowing that the HDD controller 9 has completed the recording of the data, the AV formatter 22 again arbitrates the recording analyzer 23, the reproduction analyzer 24 and the HDD controller 9.

In this way, the AV data sent from the BS broadcast station is received by the STB 2 and recorded by the HDD system 2.

Next, the operation of the HDD system 2, wherein the recorded AV data is reproduced on the monitor 5 connected to the STB 3 via the IEEE1394 bus 1, will be described.

First, the IEEE1394 interface 20 of the STB 3 issues an authentication request to the IEEE1394 interface 6 of the HDD system 2, and the IEEE1394 interface 20 and the IEEE1394 interface 6 carry out authentication operation.

When the authentication operation is carried out successfully, the AV formatter 22 designates the start LBA of the AV data to be read and the number of sectors to be read, and issues a reading command to the HDD controller 9.

The AV formatter 22 designates the length of the disk access unit 27 as the number of sectors to be read. In other words, the AV formatter 22 reads data in the disk access units 27. In addition, the start of the AV data can be known by referring to the chain information 30 of FIG. 4. In other words, this is possible because the information of the recording position of the disk access unit 27 to be read next is described in the chain information 30.

The HDD controller 9 of the HDD system 2 controls the spindle motor 11 and the actuator 13 on the basis of the LBA and the number of the sectors designated by the AV formatter 22 and positions the head 14 at the next AV data reading position of the disk medium 12. The head 14 reads a signal recorded on the disk medium 12. The head amp 15 amplifies this signal by a predetermined magnification and outputs it to the disk controller 9. The HDD controller 9 converts the signal into digital data.

The AV formatter 22 temporarily stores the AV data from the HDD controller 9 in the SD-RAM 25. When the AV data read in the SD-RAM 25 is stored and the stored data becomes a predetermined amount, for example, the length of the disk access unit 27, the AV formatter 22 transfers the AV data from the SD-RAM 25 to the reproduction analyzer 24.

The reproduction analyzer 24 separates the time stamps added to the MPEG2 transport packets of the AV data sent from the AV formatter 22, and transfers the transport packets, from which the time stamps have been eliminated, to the IEEE13941 interface 6 at the timing indicated by the time stamps.

In the case when the AV data transferred to the STB 3 is asserted to have a copyright, the IEEE1394 interface 6 encrypts the AV data. The encrypted AV data is transferred as isochronous packets from the reproduction port 55 to the IEEE1394 bus 1.

The IEEE1394 interface 20 of the STB 3 identifies the channel number and receives the isochronous packets sent from the IEEE1394 interface 44. The IEEE1394 interface 20 then converts the received isochronous packets into the MPEG2 transport stream. In the case when this MPEG2 transport stream has been encrypted, it is decrypted and output to the transport decoder 18.

The transport decoder 18 separates the MPEG2 transport stream and converts it into an elementary stream.

The AV decoder 19 decompresses the elementary stream, converts it into an analog signal and outputs it to the monitor 5.

The monitor 5 displays the AV data on its screen.

In this way, the AV data recorded in the HDD system 2 is displayed on the monitor 5 connected to the STB 3 via the IEEE1394 bus 1.

In this HDD system 2, the AV block 8, the HDD controller 9, the HDD 10 and the IEEE1394 interface 6 are integrated. In addition, the AV block 8 and the HDD controller 9 are disposed on the same PC board. Furthermore, when the HDD system 2 records or reproduces the AV data asserted to have a copyright, the IEEE1394 interface 6 carries out authentication operation, and the AV data is encrypted and transferred via the IEEE1394 bus 1.

Hence, external apparatuses, such as the STB 3, cannot gain direct access to the HDD controller 9. In other words, it is impossible to read the AV data by directly connecting an external apparatus to the interface of the HDD controller 9 and by controlling the HDD controller 9. Moreover, among the external apparatuses connected to the IEEE1394 bus 1, only the apparatus that is qualified to use the AV data asserted to have the copyright can gain access to the AV data. Hence, it is possible to protect the copyright of the AV data asserted to have the copyright.

Furthermore, in the recording format described in the explanation of the conventional technology, a standard recording format wherein any external apparatuses can gain direct access to the hard disk apparatus and can be connected to any apparatuses is adopted.

On the other hand, since the HDD system 2 of this embodiment adopts a recording format particularly intended to record/reproduce AV data, not all apparatuses can gain access thereto. Hence, in addition to the fact that the IEEE1394 interface 6, the AV block 8 and the HDD controller 9 are disposed on the same PC board, it is possible to obtain a subsidiary effect wherein the copyright of the AV data asserted to have the copyright can be protected more securely.

The operation of simultaneously recording and reproducing AV data by the HDD system 2 was described above in detail.

Next, AV data sent from a BS broadcast station is received by the STB 3 and recorded by the HDD system 2. The operation wherein, simultaneously with the recording of the AV data, the AV data having been recorded in the HDD system 2 is reproduced on the monitor 5 connected to the STB 3 via the IEEE1394 bus 1 will be described.

The operation of recording the AV data by the HDD system 2 is similar to that described above. In other words, the IEEE1394 interface 6 identifies the channel number and receives recording isochronous packets from the recording port 54. The recording analyzer 23 then adds time stamps to the transport packets, analyzes the MEPG2 transport stream and creates the special reproduction information 31 and the PSI information 32. The recording analyzer 23 then transfers the AV data, the special reproduction information 31 and the PSI information 32 to the AV formatter 22.

Furthermore, the AV formatter 22 temporarily stores the AV data, the special reproduction information 31 and the PSI information 32 sent from the recording analyzer 23 in the SD-RAM 25. Then, the AV formatter 22 creates the chain information 30 and stores it in the SD-RAM 25. When a constant amount of data, that is, an amount corresponding to the length of the disk access unit, is stored in the SD-RAM 25, the AV formatter 22 transfers the data from the SD-RAM 25 to the HDD controller 9, designates a recording start LBA and the number of sectors to be recorded, and issues a recording command to the HDD controller 9.

The HDD controller 9 controls the HDD 10 to record the data on the disk medium 12.

In this way, the AV data recorded on the disk medium 12 is reproduced simultaneously. At the time of reproduction, the AV formatter 22 designates the start LBA of the AV data to be read and the number of sectors to be read, and issues a reading command to the HDD controller 9.

The start LBA of the AV data to be read can be found quickly by using the recording format of this embodiment. In other words, it is assumed that the AV formatter 22 has read the information of the header 28 of one disk access unit 27 of the AV data to be reproduced. In this case, by referring to the position 41 of the subsequent disk access unit of the chain information 30, it is possible to trace the disk access units 27 subsequent to this disk access unit 27 sequentially.

Furthermore, for example, by referring to the position 44 of the nd-th subsequent disk access unit and the like, it is possible to refer to the disk access units every nd pieces thereof.

Hence, when finding the start LBA of the AV data to be read, it is not necessary to trace all the disk access units 27; it is possible to trace the disk access units 27 at intervals and then to trace all the disk access units 27 near the start LBA of the AV data to be read. Therefore, it is possible to quickly find the start LBA of the AV data to be read.

The HDD controller 9 controls the spindle motor 11 and the actuator 13 on the basis of the start LBA and the number of the sectors to be read in accordance with the designation by the AV formatter 22, and reads data via the head 14 and the head amp 15.

The AV formatter 22 transfers the data from the HDD controller 9 and temporarily stores the data in the SD-RAM 25. When a constant amount of data, for example, 2 Mbytes, is stored in the SD-RAM 25 as data to be reproduced, the AV formatter transfers the data to the reproduction analyzer 24.

The reproduction analyzer 24 separates the time stamps added to the transport packets and transfers the transport packets to the IEEE13941 interface 6 at the timing indicated by the time stamps.

The IEEE1394 interface 6 transfers the MPEG2 transport stream as isochronous packets from the reproduction port 55 to the IEEE1394 bus 1.

As described above, when recording and reproduction are carried out simultaneously, the AV formatter 22 switches between the transfer of recording data and the transfer of reproduction data to the HDD controller 9 in accordance with time-sharing. In addition, the AV formatter arbitrates data transfer to the recording analyzer 23, the reproduction analyzer 24 and the SD-RAM 25. As described above, the AV formatter 22 is capable of carrying out data processing on two or more channels simultaneously.

In addition, when watching reproduced images on the monitor 5 during the simultaneous recording and reproduction, the reproduction can be stopped temporarily on an errand. The screen of the monitor 5 is made still and the watching is stopped temporarily.

When resuming the watching on the monitor 5 after the errand, it is possible to follow the scene being broadcast at present by checking the main points of the program while carrying out special reproduction, such as cueing. The operation for following the scene being broadcast at present by carrying out this kind of special reproduction is hereafter referred to as follow-up reproduction.

Next, the operation of this follow-up reproduction will be described. Since the operation of recording the program being broadcast at present is the same as that described before, its explanation is omitted.

By issuing a reading command to the HDD controller 9, the AV formatter 22 reads data for the follow-up reproduction and temporarily stores the data in the SD-RAM 25.

The AV formatter 22 reads the special reproduction information 31 created for the purpose during recording and can know which portion of the recorded AV data is to be read.

In other words, the AV formatter 22 can know the interval of frame occurrence wherein the I-frame occurs in accordance with the frame occurrence pattern 45 of the special reproduction information 31 of the disk access unit 27 having been read. For example, it is assumed that the I-frame occurs once every 15 frames.

When a frame, the kind 49 of which is an I-frame, is found first, the data of the frame is extracted.

After this, it is known that one I-frame occurs once every 15 frames in accordance with the frame occurrence pattern 45; hence, frame data is extracted every 15 frames.

In this way, by using the special reproduction information 31, I-frames used for the special reproduction and their positions in the disk access units 27 can be specified efficiently. Therefore, the I-frames used for the special reproduction can be extracted efficiently.

When a constant amount of data, for example, 2 Mbytes, is stored in the SD-RAM 25 as data to be follow-up reproduced, the AV formatter 22 transfers the data to be follow-up reproduced to the reproduction analyzer 24.

The AV data sent from the AV formatter 22 to the reproduction analyzer 24 is sent as transport packets; however, the transport packets of only a portion of the AV data having been recorded are sent. In other words, the transport packets of all or a portion of the I-frames used for the special reproduction are sent. Hence, information required for the grammar of the MEPG may drop or unnecessary information may be added.

Hence, the reproduction analyzer 24 reconfigures the transferred transport packets so as to conform to the grammar of the MPEG. The reproduction analyzer 24 then transfers the reconfigured transport packets as the MPEG2 transport stream to the IEEE1394 interface 6.

Since the subsequent operation is the same as that for the reproduction described above, its explanation is omitted.

As described above, when carrying out the follow-up reproduction, the reproduction analyzer reconfigures the MPEG2 transport stream for the special reproduction.

As described above, the IEEE1394 interface 6 has the recording port 54 and the reproduction port 55, and the AV formatter 22 is capable of processing two or more channels of AV data simultaneously; the AV data can be recorded and reproduced simultaneously by exchanging the AV data between the AV formatter 22 and the HDD controller 9 in accordance with time-sharing.

In addition, AV data having a high transfer rate, such as high-definition television data, can also be recorded and reproduced simultaneously.

In other words, by adopting the recording format exclusively used for AV data, it is possible to carry out recording and reproduction efficiently.

Furthermore, by using the recording format of this embodiment, not only the above-mentioned cueing but also reviewing can be attained efficiently. Still further, first forwarding and rewinding can also be attained efficiently.

By using the recording format of this embodiment as described above and by determining beforehand that the length of the disk access unit 27 is a length wherein continuous transfer can be ensured, even AV data having a high transfer rate, such as a high-definition television broadcast, can be recorded and reproduced simultaneously.

In addition, since the disk access unit 27 is set to have a fixed length, the headers 34 of the transport packets can be obtained by calculation, whereby the speed of access can be raised further.

Furthermore, compensation can be carried out so that the transfer rate for one channel does not become lower than a constant value during simultaneous recording and reproduction.

Moreover, since the header 28 of the disk access unit 28 is provided with the special reproduction information 31, special reproduction can be carried out efficiently.

The header 28 of this embodiment is an example of the header portion of the present invention, and the MEPG transport stream 29 of this embodiment is an example of the AV data portion of the present invention.

In addition, although it is explained that the AV block 8 and the HDD controller 9 are disposed on the same PC board in this embodiment, the present invention is not limited to this configuration. Furthermore, the IEEE1394 interface 6 can also be disposed on the same board. In other words, the IEEE1394 interface 6, the AV block 8 and the HDD controller 9 may be disposed on the same PC board. With this configuration, the copyright of AV data can be protected more securely.

Moreover, although it is explained that the recording format of the present invention is used for the hard disk system just as in this embodiment, the present invention is not limited to this configuration; briefly speaking, the format should only be a recording format used for random-access recording media, such as magneto-optical discs and DVD-RAM discs.

Still further, although it is explained that the HDD system 2 is connected to the IEEE1394 bus 1, the present invention is not limited to this configuration; connection to another bus, such as a USB, or to another network may be possible.

### (Second embodiment)

First, a second embodiment will be described.

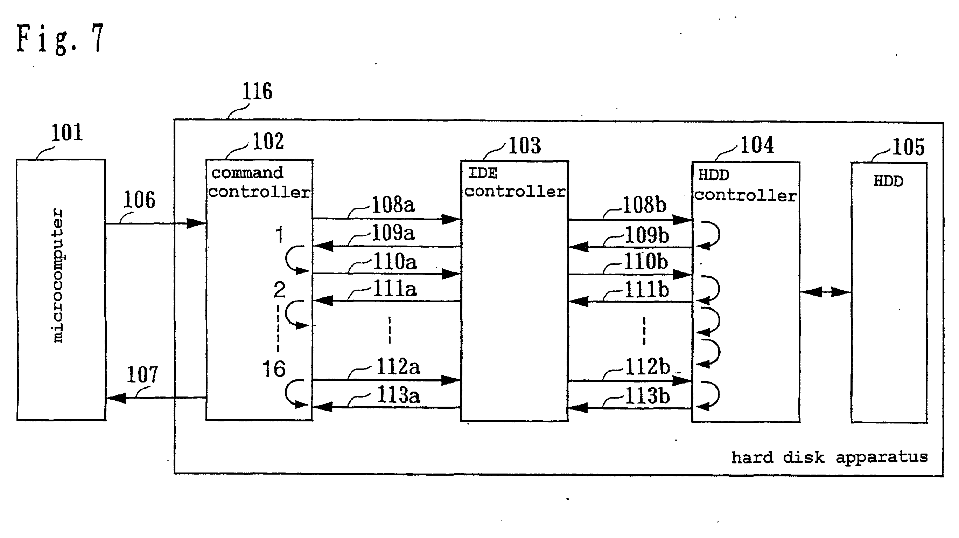

FIG. 7 shows a hard disk apparatus 116 in accordance with this embodiment.

The hard disk apparatus 116 comprises a command controller 102, an IDE controller 103, a HDD controller 104 and a HDD 105.

In addition, a microcomputer 101 is connected to the hard disk apparatus 116.

The command controller 102 is means of controlling the addresses, transfer size and interface signal of data to be recorded or read.

The IDE controller 103 is means of controlling the HDD controller 104 having an IDE interface not shown.

The HDD controller 104 is means, having an IDE interface, of carrying out control so that the HDD 105 reads/writes data by assigning designated LBAs (logical block addresses) to tracks and sectors of a magnetic disk medium and by positioning the magnetic head of the HDD 105.

The HDD 105 is a hard disk having a magnetic disk medium.

The microcomputer 101 is means of giving data reading/writing commands to the command controller 102.

The hard disk apparatus 116 of this embodiment is an example of a reproducing apparatus in accordance with the present invention, and the hard disk apparatus 116 of this embodiment also serves as an example of a recording apparatus in accordance with the present invention; the HDD 105 and the HDD controller 104 of this embodiment are examples of reproduction means in accordance with the present invention, and the HDD 105 and the HDD controller 104 of this embodiment also serve as examples of recording means in accordance with the present invention; the HDD controller 104 of this embodiment is an example of an interface in accordance with the present invention; the IDE controller 103 of this embodiment is an example of control means in accordance with the present invention; and the command controller 102 of this embodiment is an example of a command control means in accordance with the present invention. Furthermore, the read command of this embodiment is an example of control information in accordance with the present invention, and the memory of this embodiment is an example of a predetermined storage medium in accordance with the present invention.

Next, the operation of the hard disk apparatus 116 of this embodiment will be described.

The operation at the time when the microcomputer 101 reads 2 Mbytes of data from the hard disk apparatus 116 will be described.

In the IDE interface, the maximum data size that can be transferred by one command exchange is 128 kbytes. In addition, it is assumed that data to be read has been stored at address 0 and the following addresses.

Hence, the microcomputer 101 issues a read command 106 used to read 2 Mbytes of data from address 0 and the following addresses. Immediately after issuing the read command 106, the microcomputer 101 is ready to carry out other processes.

After receiving the read command 106, the command controller 102 calculates addresses and transfer size from the read command 106 and converts the command into a command conforming to the IDE interface. In other words, the read command 106 gives a direction so as to read an amount of data larger than 128 kbytes, i.e., the maximum data size that can be exchanged by one command exchange through the IDE interface. Hence, plural commands conforming to the IDE interfaces are created from the read command 106, whereby the start address, at which the data of each created command is read, and the transfer size are obtained.

The command controller 102 then issues the created commands to the IDE controller 103 as described below.

First, the command controller 102 issues a read command 108a for reading 128 kbytes of data from address 0 and the following addresses to the IDE controller 103.

After receiving the read command 108a, the IDE controller 103 issues a read command 108b for reading 128 kbytes of data from address 0 and the following addresses to the HDD controller 104.

After receiving the read command 108b, the HDD controller 104 carries out control so that the HDD 105 makes preparation for reading.

Even while the HDD 105 makes preparation for reading, the IDE controller 103 keeps monitoring the state of the HDD 105 at all times to recognize whether the HDD 105 is ready to read data.

When IDE controller 103 detects that the HDD 105 is ready to read data, 128 kbytes of data is read sequentially. In addition, while the data is read, the IDE controller 103 carries out error check to see whether the data has been read normally. The IDE controller 103 stores the data read from the HDD controller 104 in the memory of the microcomputer 101. After receiving a command end notice 109b from the HDD controller 104 and completely storing all the data having been read in the memory, the IDE controller 103 issues a command end notice 109a to the command controller 102.

After receiving the command end notice 109a from the IDE controller, the command controller 102 issues a read command 110a used to read 128 kbytes of data from address 128 kbytes and the following addresses.

By an operation similar to that carried out when the command controller 102 issued the read command 108a, the IDE controller 103 stores the data read from the HDD controller 104 in the memory. After receiving a command end notice 111b from the HDD controller 104 and completely storing all the data having been read in the memory, the IDE controller 103 issues a command end notice 111a to the command controller 102.

This kind of operation is repeated; in the end, the command controller 102 issues a read command 112a used to read 128 kbytes of data from address 1920 kbytes and the following addresses.

By an operation similar to that described above, the IDE controller 103 issues a read command 112b used to read 128 kbytes of data from address 1920 kbytes and the following addresses to the HDD controller 104.

The IDE controller 103 stores the data read from the HDD controller 104 in the memory. After receiving a command end notice 113b from the HDD controller 104 and completely storing all the data having been read in the memory, the IDE controller 103 issues a command end notice 113a to the command controller 102.

By issuing read commands 16 times in total as described above, the command controller 102 reads 2 Mbytes of data from address 0 and the following addresses.

When the command controller 102 receives the command end notice 113a for the 16th command from the IDE controller 103, data reading is fully completed. Hence, the command controller 102 issues a command end notice 107 to the microcomputer 101.

When receiving the command end notice 107, the microcomputer 101 knows that the reading of data of 2 Mbytes from address 0 and the following addresses has been completed.

The above-mentioned IDE controller 103 transfers 128 kbytes of data by using one command, such as the read command 108a, sent from the command controller 102. On the other hand, the command controller 102 transfers 2 Mbytes of data by using one command, such as the read command 106, sent from the microcomputer 101.

Hence, when it is assumed that the amount of data transfer by the IDE controller 103 by using one command from the command controller 102 is M and that the amount of data transfer by the command controller 102 by using one command from the microcomputer 101 is N, M and N satisfy N > M.

In other words, the amount of data transfer by the command controller 102 by using one command is larger than that by the IDE controller 103.

Hence, by providing the command controller 102 in the hard disk apparatus 116, the microcomputer 101 can read continuous data in large units. Therefore, overhead in commands decreases, whereby the usability of the CPU at the time of reading data from the head disk apparatus 116 can be lowered.

In a similar way, even when the microcomputer 101 writes 2 Mbytes of data at address 0 and the following addresses in the hard disk apparatus 118, the microcomputer 101 can write data in the hard disk apparatus 118 by issuing one command.

By using the hard disk apparatus 116 of this embodiment, when data is read from or written to the hard disk apparatus 116, the microcomputer 101 can read and write continuous data, such as AV data, altogether in large units. In other words, even when the amount of data at the time of reading or writing becomes large, the microcomputer 101 can carry out data reading or writing without increasing the number of command issues. In addition, since it is not necessary to monitor or control the state of the hard disk apparatus 116, the microcomputer can carry out other processes immediately after command issuing.

When carrying out performance evaluation, the hard disk apparatus 116 of this embodiment can carry out performance evaluation in the same state as that of an actual usage method. This kind of performance evaluation was unable to be carried out by the conventional hard disk apparatus 118 shown in FIG. 10.

In other words, in the conventional hard disk apparatus 118 shown in FIG. 10, in the case when the CPU of the microcomputer 101 carries out processing other than data reading or writing from the hard disk apparatus 118, or when interruptions occur due to occurrence of other events, an irregular wait is included each time between a command issued by the microcomputer 101 to the IDE controller 103 and the next command. Hence, the interval between commands received by the IDE controller 103 changes irregularly.

In addition, this irregularity changes greatly depending on environment wherein the microcomputer 101 is used actually. For example, the irregularity changes greatly depending on the following environment, that is, depending on whether another apparatus, such as a modem or a printer, is connected to the microcomputer 101 or not; in the case when another apparatus is connected, depending on what kind of processing the apparatus is carrying out; depending on whether another program is running in the microcomputer 101 or not; in the case when such a program is running, depending on what kind of processing the program is running.

Hence, when evaluating the performance of the hard disk apparatus 118 at a factory, it is necessary to reproduce the actual usage environment of the hard disk apparatus 118; however, it is substantially impossible to reproduce innumerable usage environments.

On the other hand, in the hard disk apparatus 116 of this embodiment, even if the interval between commands, such as the read commands 106, issued from the microcomputer 101 becomes irregular owing to reasons similar to those described above, the interval between commands, such as the read commands 108a issued by the command controller 102 to the IDE controller 103 in response to the read commands 106 issued from the microcomputer 101 becomes constant. Furthermore, the interval between commands, such as the read commands 106, issued by the microcomputer 101 to the command controller 102 is larger than the interval between commands, such as the read commands 108a, issued from the command controller 102 to the IDE controller 103. Hence, even if the interval between commands issued by the microcomputer 101 becomes irregular, during the period of one command issued by the microcomputer 101, the interval between commands issued by the command controller 102 to the IDE controller 103 becomes very regular. In this way, in comparison with the conventional hard disk apparatus 118, the hard disk apparatus 116 is less affected by the usage environment. Therefore, it is not necessary to reproduce various usage environments at a factory, whereby performance evaluation can be carried out accurately.

In addition, in comparison with the conventional hard disk apparatus 118, the hard disk apparatus 116 of this embodiment does not require any large-capacity buffer memory as a buffer memory that is used during data transfer. In other words, in the conventional hard disk apparatus 118, data transfer with the microcomputer 101 must be carried out at a high data transfer rate when transfer is possible, for example, when the microcomputer 101 is not carrying out other processing. This transfer becomes intermittent block transfer, and the interval of the data transfer becomes irregular as described above. On the other hand, data transfer to the recording medium of the HDD105 is carried out continuously at a constant transfer rate.

Hence, in order to accommodate the difference between the two data transfer systems, a large-capacity buffer memory for temporarily storing data is required between the microcomputer 101 and the recording medium of the HDD 105. In particular, the longer the interval of data transfer by the microcomputer 101 from this buffer memory and the higher the data transfer rate during the transfer, the larger the capacity of the buffer memory is required. In this case, if a buffer memory having a small capacity is used, it is necessary to temporarily interrupt data transfer in order to carry out data transfer completely.

However, in the case of the hard disk apparatus 116 of this embodiment, during writing, the capacity of this kind of buffer memory should only be a capacity capable of storing data that is stored in the period from data reception by the hard disk apparatus 116 from the microcomputer 101 to the start of actual data writing on the recording medium of the HDD 105. In addition, during reading, the capacity of the buffer memory should only be a capacity capable of storing data that is stored in the period from the start of reading by the hard disk apparatus 116 from the recording medium of the HDD 105 to data reading by the microcomputer 101. As described above, in comparison with the conventional hard disk apparatus 118, the hard disk apparatus 116 of this embodiment does not require any large-capacity buffer memory that is used to temporarily store data.

In addition, in this embodiment, it is explained that the hard disk apparatus 116 is provided with the command controller 102; however, the present invention is not limited to this configuration. The hard disk apparatus 116 is not required to be provided with the command controller 102, but the microcomputer 101 may be provided with the command controller 102. Briefly speaking, the command controller 102 may be provided outside the hard disk apparatus 116.

Furthermore, the reproducing apparatus or the recording apparatus in accordance with the present invention is not limited to the hard disk apparatus of this embodiment; however, the apparatus may be an optical disc apparatus, such as a DVD or CD apparatus.

Moreover, in this embodiment, it is explained that the IDE controller 103 transfers 128 kbytes of data by using one command sent from the command controller 102 and that the command controller 102 transfers 2 Mbytes of data by using one command sent from the microcomputer 101; however, the present invention is not limited to this method. When it is assumed that the amount of data transfer by the IDE controller 103 by using one command from the command controller 102 is M and that the amount of data transfer by the command controller 102 by using one command from the microcomputer 101 is N, M and N should only satisfy N > M.

### (Third embodiment)

Next, a third embodiment will be described.

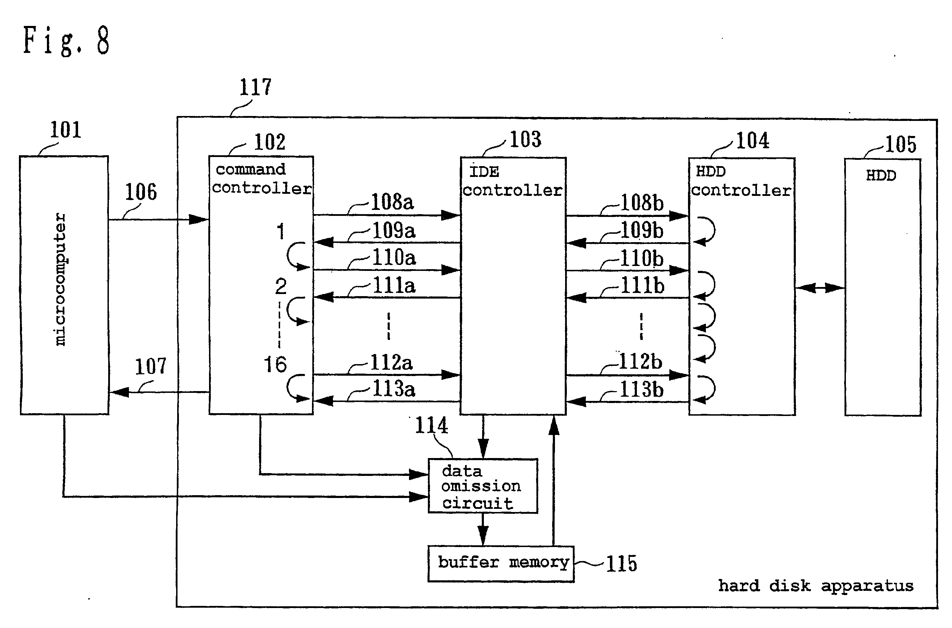

FIG. 8 shows a hard disk apparatus 117 in accordance with this embodiment,

The hard disk apparatus 117 in accordance with this embodiment is the hard disk apparatus 116 in accordance with the second embodiment additionally provided with a data omission circuit 114 and a buffer memory 115.

The data omission circuit 114 is a circuit of omitting unnecessary data from data read by the IDE controller 103 before the data is stored in the buffer memory 115 thereby to obtain only necessary data.

The buffer memory 115 is means of temporarily storing data read by the IDE controller 103.

The hard disk apparatus 117 of this embodiment is an example of a recording apparatus in accordance with the present invention, and the hard disk apparatus 117 of this embodiment also serves as an example of a reproducing apparatus in accordance with the present invention; furthermore, the data omission circuit 114 of this embodiment is an example of data selection means in accordance with the present invention, and the buffer memory 115 of this embodiment is an example of buffer means in accordance with the present invention; the HDD 105 and the HDD controller 104 of this embodiment are examples of reproducing means in accordance with the present invention, and the HDD 105 and the HDD controller 104 of this embodiment also serve as examples of reading means in accordance with the present invention.

Next, the difference between the operation of this embodiment and the operation of the second embodiment will be described mainly.

Since the operation on the basis of command exchange among the microcomputer 101, the command controller 102, the IDE controller 103 and the HDD controller 104 is the same as that of the second embodiment, its explanation is omitted.

It is assumed that the IDE controller 103 has read 128 kbytes of data by issuing a command, such as the read command 108b, to the HDD controller 104.

The IDE controller 103 then sends data having been read to the data omission circuit 114.

Since the IDE interface carries out data transfer in fixed-length block units, unnecessary data may sometimes be read, for example, in the case when data that is desired to be read is variable-length data.

Hence, the data omission circuit 114 omits unnecessary portions from data having been sent, whereby data having only the necessary portions is stored in the buffer memory 115.

The data stored in the buffer memory 115, not including unnecessary data, is transferred to the memory.

As described above, in this embodiment, selecting only the necessary portions of data by carrying out complicated pointer management is not necessary.

It is explained that the hard disk apparatus 117 of this embodiment conforms to the IDE interface; however, the present invention is not limited to this conformation. Briefly speaking, the hard disk apparatus should only conform to an interface wherein its data transfer unit is a fixed-length block unit, such as the SCSI interface.

In addition, in this embodiment, it is explained that the hard disk apparatus 117 is provided with the command controller 102; however, the present invention is not limited to this configuration. The hard disk apparatus 116 is not required to be provided with the command controller 102, but the microcomputer 101 may be provided with the command controller 102. Briefly speaking, the command controller 102 may be provided outside the hard disk apparatus 116.

Furthermore, the reproducing apparatus or the recording apparatus in accordance with the present invention is not limited to the hard disk apparatus of this embodiment; however, the apparatus may be an optical disc apparatus, such as a DVD or CD apparatus. Briefly speaking, the reproducing apparatus or the recording apparatus in accordance with the present invention should only be an apparatus capable of gaining random access to recording media.

### (Fourth embodiment)

Next, a fourth embodiment will be described.

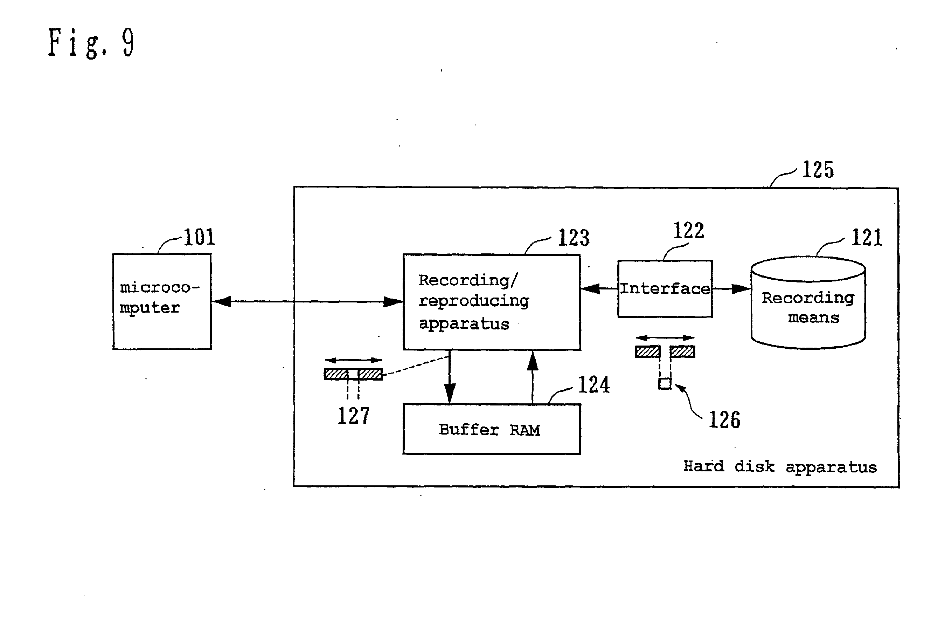

FIG. 9 shows a hard disk apparatus 125 in accordance with this embodiment.

The hard disk apparatus 125 in accordance with this embodiment is provided with a recording/reproducing apparatus 123, a buffer RAM 124, an interface 122 and a recording means 121. In addition, the hard disk apparatus 125 is controlled by a microcomputer 101.

The recording means 121 is means of recording or reading AV data on a magnetic disk medium and means having functions similar to those of the HDD controller 104 and the HDD 105 of the second embodiment.

The interface 122 is an IDE interface that relays control commands and data to the recording means 121.

The recording/reproducing apparatus 123 is an apparatus that carries out signal processing in order to record or reproduce AV data; in the case when dropouts occur in read data due to an error occurred at the tine when the recording means 21 reads the AV data from the magnetic disk medium during reproduction, the apparatus complements the dropouts and stores the data in the buffer RAM 124.

The buffer RAM 124 is a buffer that temporarily stores the AV data sent from the microcomputer 101 and temporarily stores the AV data read by the recording means 121.

The hard disk apparatus 125 of this embodiment is an example of a reproducing apparatus in accordance with the present invention, the recording/reproducing apparatus 123 of this embodiment is an example of a reproducing apparatus in accordance with the present invention, and the recording/reproducing apparatus 123 of this embodiment also serves as an example of a complementing means in accordance with the present invention.

Next, the operation of this embodiment will be described.

When AV data is reproduced, the microcomputer 101 issues a read command that gives a direction to transfer 2 Mbytes of AV data for example to the recording/reproducing apparatus 123.

After receiving the read command from the microcomputer 101, the recording/reproducing apparatus 123 controls the recording means 121 while monitoring the operation state of the recording means 121 via the interface 122 so as to read 2 Mbytes of AV data at the head LBA and the following addresses wherein the AV data is recorded.

The recording means 121 reads the AV data via the interface 122 in accordance with the control of the recording/reproducing apparatus 123 and transfers the read AV data to the recording/reproducing apparatus 123 via the interface 122.

The recording/reproducing apparatus 123 temporarily stores the read AV data in the buffer RAM 124 and transfers the data to the microcomputer 101 sequentially.

In this way, the hard disk apparatus 115 transfers 2 Mbytes of AV data to the microcomputer 101 continuously without interruption.

However, it is assumed that an error occurred when the recording means 121 read the AV data from the magnetic disk medium. This kind of error may occur in the case when defects occurred in sectors on the magnetic disk medium, for example.

In this case, the recording means 121 notifies the recording/reproducing apparatus 123 via the interface 122 that a reading error has occurred.

The data including the error and sent to the recording/reproducing apparatus 123 has a dropout just as in the case of dropout data 126.

Unlike the case of data and programs for computers, in the case of AV data and the like, the continuity of processing is more important than the reliability of the data.

Hence, the recording/reproducing apparatus 123 complements the portion of the dropout data 126 by using appropriate data, stores the complemented data in the buffer RAM 124 and continues the reading process of the remaining AV data.

As described above, even if an error occurs when data is read from the magnetic disk medium, the hard disk apparatus 125 does not carry out error processing, such as alternation processing, linear reassigning of LBAs so as not to use the sectors wherein the error occurred, or the like, but continues to read the next AV data and continues the transfer of the read AV data to the microcomputer 101.

In this embodiment, it is explained that the recording/reproducing apparatus 123 complements the portion of the dropout data 126 by using appropriate data; however, the present invention is not limited to this method. The dropout data 126 may be complemented by using AV data that was able to be reproduced normally.

As described above, in this embodiment, even if an AV data reading error occurs during reproduction, the hard disk apparatus 125 complements the dropout data 126 by using the AV data having been read normally and continues the reproduction processing of the AV data just as it is, whereby the AV data can be transferred continuously without interruption.

Furthermore, the reproducing apparatus in accordance with the present invention is not limited to the hard disk apparatus of this embodiment; however, the apparatus may be an optical disc apparatus, such as a DVD or CD apparatus. Briefly speaking, the reproducing apparatus in accordance with the present invention should only be an apparatus capable of gaining random access to recording media.

The present invention is a program that carries out the functions of all or part of the means (or apparatuses, devices, circuits, portions, etc.) of the above-mentioned recording or reproducing apparatus of the present invention by using a computer and operates in cooperation with the computer.

Part of the means (or apparatuses, devices, circuits, portions, etc.) of the present invention designates some means in the plural means, or part of functions in one means.

In addition, a recording medium on which the program of the present invention has been recorded and which is readable by a computer is also included in the present invention.

Furthermore, a utilization form of the program of the present invention may be an embodiment that is recorded on a recording medium readable by a computer and operates in cooperation with the computer.

Still further, a utilization form of the program of the present invention may be an embodiment that is transmitted through a transmission medium and read by a computer and operates in cooperation with the computer.

Still further, the recording medium includes ROM and the like, and the transmission medium includes a transmission medium, such as the Internet, light, electric wave, sound wave, etc.

Still further, the above-mentioned computer of the present invention is not limited to pure hardware, such as a CPU, but may include firmware, OS and peripheral devices.

Still further, as described above, the configuration of the present invention may be attained by software or by hardware.

### INDUSTRIAL APPLICABILITY

As clearly described above, the present invention can provide a recording format suited for recording/reproducing AV data.

In addition, the present invention can provide a recording format wherein data reading does not take time at the time of special reproduction.

Furthermore, the present invention can provide a recording apparatus, a reproducing apparatus and a program that does not increase the number of issues of data reading or writing commands, even when the amount of data is large, just as in the case of AV data.

Moreover, the present invention can provide a recording apparatus, a reproducing apparatus and a program that can efficiently read data without making pointer management complicated at the time of reading variable-length data.

Still further, the present invention can provide a recording apparatus, a reproducing apparatus and a program that can transfer AV data continuously without interruption even when an error occurs during reproduction.

## Claims

1. A recording format that is used when AV data is recorded on a disk, wherein
a disk access unit, the minimum unit for continuously gaining access to the disk, has a fixed length and is divided into a header portion and an AV data portion.

2. A recording format in accordance with claim 1, wherein at least one of the chain information, special reproduction information and PSI information of said disk access unit is described in said header portion.

3. A recording format in accordance with claim 2, wherein said special reproduction information includes at least one of information on the head position, kind and length of a frame, information on a frame occurrence pattern, information on the integration value of the number of frames occurring from the start of recording and information on the number of frames included in said disk access unit.

4. A recording format in accordance with claim 2 or 3, wherein the chain information of said disk access unit is information designating the positions of the preceding and subsequent disk access units of said disk access unit or information designating the positions of one or more subsequent disk access units of said disk access unit.

5. A recording format in accordance with any one of claims 1 to 4, wherein MPEG transport stream data is described in said AV data portion.

6. A recording format in accordance with any one of claims 1 to 5, wherein said fixed length is 2 Mbytes.

7. A recording format in accordance with any one of claims 1 to 5, wherein the length of said disk access unit can be changed depending on the performance of a hard disk.

8. A reproducing apparatus comprising:
reading means of reading data recorded on a recording medium,
a predetermined interface of relaying data from said reading means in fixed block units,
data selecting means of omitting unnecessary data included in said fixed blocks relayed by said interface at the time when said data to be reproduced is read from said interface thereby to have only said data to be reproduced, and
buffer means of temporarily storing said data to be reproduced that is output from said data selecting means, wherein
said data to be reproduced that is recorded in said buffer means is read by another apparatus.

9. A reproducing apparatus comprising:
reproducing means of reproducing AV data recorded on a recording medium, and
complementing means of complementing dropouts occurred in said reproduced AV data and outputting the AV data, said dropouts of which have been complemented.

10. A reproducing apparatus in accordance with claim 9, wherein said complementing means complements said dropouts of said AV data by using normally reproduced portions of said AV data.

11. A reproducing apparatus comprising:
reproducing means of reproducing data from a recording medium on which data has been recorded,
a predetermined interface of relaying control information and said data to said reproducing means,
control means of transferring said control information and said data to said interface and monitoring the state of said reproducing means, and
command control means of creating said control information from a predetermined command used to reproduce data and transferring said control information to said control means, wherein
said predetermined command is sent from a microprocessor to which said reproducing apparatus is connected,
when it is assumed that the amount of data transfer by said control means by using one command is M and that the amount of data transfer by said command control means by using one command is N, N and M satisfy N > M,
said control means notifies the state of said reproducing means to said command control means, and
said command control means notifies the completion of the processing of said predetermined command to said microprocessor.

12. A reproducing apparatus comprising:
reproducing means of reproducing data from a recording medium on which data has been recorded,
a predetermined interface of relaying control information and said data to said reproducing means, and
control means of transferring said control information and said data to said interface and monitoring the state of said reproducing means, wherein
to command control means of creating said control information from a predetermined command sent from a microprocessor, to which said reproducing apparatus is connected, and used to reproduce data and transferring said control information to said control means,
said control means notifies the state of said reproducing means,
said command control means notifies the completion of the processing of said predetermined command to said microprocessor, and
when it is assumed that the amount of data transfer by said control means by using one command is M and that the amount of data transfer by said command control means by using one command is N, N and M satisfy N > M.

13. A reproducing apparatus in accordance with claim 11 or 12, wherein said control means directly transfers said data reproduced from said reproducing means and stored in said interface to a predetermined recording medium other than said recording medium.

14. A reproducing apparatus in accordance with claim 13, wherein
said reproducing means, outputting data in fixed block units, comprises:
data selecting means of omitting unnecessary data included in said fixed blocks from said interface thereby to have only said data to be reproduced, and
buffer means of temporarily storing said data to be reproduced that is output from said data selecting means, wherein
said control means directly transfers said data to be reproduced and stored in said buffer means to said other predetermined recording medium.

15. A reproducing apparatus in accordance with any one of claims 11 to 14, wherein said predetermined command is used to give a direction to gain access to a desired position on said recording medium.

16. A reproducing apparatus in accordance with any one of claims 11 to 15, wherein said predetermined command is used to give a direction to transfer data of a desired size.

17. A reproducing apparatus in accordance with any one of claims 8, 11 to 16, wherein said interface is an IDE interface or a SCSI interface.

18. A recording apparatus comprising:
recording means of recording data on a recording medium on which data is recorded,
a predetermined interface of relaying control information and said data to said recording means,
control means of transferring said control information and said data to said interface and monitoring the state of said recording means, and
command control means of creating said control information from a predetermined command used to record data and transferring said control information to said control means, wherein
said predetermined command is sent from a microprocessor to which said recording apparatus is connected,
when it is assumed that the amount of data transfer by said control means by using one command is M and that the amount of data transfer by said command control means by using one command is N, N and M satisfy N > M,
said control means notifies the state of said recording means to said command control means, and
said command control means notifies the completion of the processing of said predetermined command to said microprocessor.

19. A recording apparatus comprising:
recording means of recording data on a recording medium on which data is recorded,
a predetermined interface of relaying control information and said data to said recording means, and
control means of transferring said control information and said data to said interface and monitoring the state of said recording means, wherein
to command control means of creating said control information from a predetermined command sent from a microprocessor, to which said recording apparatus is connected, and used to record data and transferring said control information to said control means,
said control means notifies the state of said recording means,
said command control means notifies the completion of the processing of said predetermined command to said microprocessor, and
when it is assumed that the amount of data transfer by said control means by using one command is M and that the amount of data transfer by said command control means by using one command is N, N and M satisfy N > M.

20. A recording apparatus in accordance with claim 18 or 19, wherein said control means directly transfers said data stored in said predetermined recording medium to said interface.

21. A recording apparatus in accordance with any one of claims 18 to 20, wherein said predetermined command is used to give a direction to gain access to a desired position on said recording medium.

22. A recording apparatus in accordance with any one of claims 18 to 21, wherein said predetermined command is used to give a direction to transfer data of a desired size.

23. A recording apparatus in accordance with any one of claims 18 to 22, wherein said interface is an IDE interface or a SCSI interface.

24. A program of functioning a computer as the whole or part of said reproducing apparatus set forth in claim 8, comprising:
reading means of reading data recorded on a recording medium,
a predetermined interface of relaying data from said reading means in fixed block units,
data selecting means of omitting unnecessary data included in said fixed blocks relayed by said interface at the time when said data to be reproduced is read from said interface thereby to have only said data to be reproduced, and
buffer means of temporarily storing said data to be reproduced that is output from said data selecting means.

25. A program of functioning a computer as the whole or part of said reproducing apparatus set forth in claim 9, comprising:
reproducing means of reproducing AV data recorded on a recording medium, and
complementing means that complements dropouts occurred in said reproduced AV data and outputs the AV data, said dropouts of which have been complemented.

26. A program of functioning a computer as the whole or part of said reproducing apparatus set forth in claim 11, comprising:
reproducing means of reproducing data from a recording medium on which data has been recorded,
a predetermined interface of relaying control information and said data to said reproducing means,
control means of transferring said control information and said data to said interface and monitoring the state of said reproducing means, and
command control means of creating said control information from a predetermined command used to reproduce data and transferring said control information to said control means.

27. A program of functioning a computer as the whole or part of said reproducing apparatus set forth in claim 12, comprising:
reproducing means of reproducing data from a recording medium on which data has been recorded,
a predetermined interface of relaying control information and said data to said reproducing means, and
control means of transferring said control information and said data to said interface and monitoring the state of said reproducing means.

28. A program of functioning a computer as the whole or part of said recording apparatus set forth in claim 18, comprising:
recording means of recording data on a recording medium on which data is recorded,
a predetermined interface of relaying control information and said data to said recording means,
control means of transferring said control information and said data to said interface and monitoring the state of said recording means, and
command control means of creating said control information from a predetermined command used to record data and transferring said control information to said control means.

29. A program of functioning a computer as the whole or part of said recording apparatus set forth in claim 19, comprising:
recording means of recording data on a recording medium on which data is recorded,
a predetermined interface of relaying control information and said data to said recording means, and
control means of transferring said control information and said data to said interface and monitoring the state of said recording means.
